# EUROPÄISCHE PATENTSCHRIFT

(11) **EP 3 932 177 B1**
(45) Veröffentlichungstag und Bekanntmachung des Hinweises auf die Patenterteilung: **22.10.2025**
(21) Anmeldenummer: 21180879.5
(22) Anmeldetag: 22.06.2021
(51) Int. Cl.: A01D 80/02, A01D 89/00

(54) **AUFNAHMEVORRICHTUNG MIT AUF EINER TROMMEL BEFESTIGTEN FÖRDERZINKEN**
PICK-UP DEVICE WITH CONVEYING TINES MOUNTED ON A DRUM
DISPOSITIF DE RÉCEPTION POURVU DE DENTS DE TRANSPORT FIXÉES À UN TAMBOUR

(30) Priorität: 29.06.2020 DE 102020117032
(43) Veröffentlichungstag der Anmeldung: 05.01.2022
(73) Patentinhaber: B. Strautmann & Söhne GmbH u. Co. KG, 49196 Bad Laer (DE)
(72) Erfinder: Strautmann, Wolfgang, 49196 Bad Laer (DE)
(74) Vertreter: Dr. Träger & Strautmann PAe PartG mbB

(56) Entgegenhaltungen:
- EP-A1- 3 028 559
- EP-A1- 3 669 637
- WO-A1-2017/140797
- DE-U1- 202019 104 058

## Beschreibung

Die Erfindung betrifft eine Aufnahmevorrichtung
- für eine Erntemaschine, wie einen Ladewagen, eine Ballenpresse, eine Heuwerbemaschine oder einen Feldhäcksler zur Aufnahme von auf einer Feld- oder Wiesenfläche liegendem Erntegut und zur Weiterförderung des Ernteguts an eine nachfolgende Erntegut-Bearbeitungseinrichtung oder
- für eine Maschine zum Aufsammeln von Abfällen und/oder Stückgut vom Boden, wie eine Strandreinigungsmaschine.

Aufnahmeeinrichtungen dieser Art sind in verschiedenen Ausführungsformen bekannt und umfassen in der Regel:
- eine drehantreibbare Trommel, die an einer Trägerkonstruktion gehalten wird, wobei die Trommel einen Trommelmantel mit einer äußeren Mantelfläche und einer inneren Mantelfläche aufweist,
- eine Vielzahl von an der Trommel angeordneten, über eine Mantelfläche der Trommel abstehenden Förderzinken aus einem elastischen Kunststoff mit einem Zinkenfuß und einem oder mehreren Einzelzinken.

Die Aufnahme und die Förderung des Sammelgutes erfolgt durch die umlaufenden Förderzinken, die am Boden liegendes Erntegut ergreifen und an der Oberseite von Abstreifern entlangführen und es an nachfolgende Erntegut-Bearbeitungseinrichtungen übergeben.

Aus WO 2017 140 797 A1 ist eine Aufnahmevorrichtung für Erntegut bekannt, auf deren Trommel Zinkenringe zur Befestigung der Förderzinken angebracht sind. Zinkenringe und Förderzinken weisen zueinander komplementäre Befestigungsmittel auf, die eine Demontage der Förderzinken ohne Demontage der Zinkenringe ermöglichen.

Aus EP 3 669 637 A1 ist eine Aufnahmevorrichtung für Erntegut bekannt, die eine Trommel mit relativ großformatigen Öffnungen im Trommelmantel aufweist. In diese Öffnungen sind die Sockelbereiche der Förderzinken einsteckbar. Mittels der Sockel ist eine formschlüssige Verbindung von Sockel und Trommelgrundkörper herstellbar. Zur Fixierung der Förderzinken an der Trommel dient eine im Inneren der Trommel vorgesehen Exzentereinrichtung, welche dazu eingerichtet ist, durch eine radiale Drehbewegung einen unteren Sockelteil des Förderzinkens gegen die Aufnahmemittel des Trommelgrundkörpers zu drücken.

Aus DE 20 2019 104 058 U1 ist eine Aufnahmevorrichtung für Erntegut bekannt, bei der die Förderzinken mittels dafür vorgesehener Haltebleche von außen auf dem Trommelmantel befestigt sind.

Aus EP 3 028 559 A1 ist eine Aufnahmevorrichtung für Erntegut bekannt, in deren Trommel Taschen zur Aufnahme der Förderzinken eingebracht sind. Die Förderzinken weisen einen Sockel auf, der sich im montierten Zustand innerhalb der genannten Taschen befindet und mittels einer Schraube fixiert wird.

Aus EP 1 980 144 A1 ist eine landwirtschaftliche Erntemaschine mit einer Aufnahmevorrichtung bekannt, bei der quer zur Fahrtrichtung angeordnete Förderzinken versetzt zueinander angeordnet sind. Dabei sind die Zinken in einem mittleren Bereich um einen gleichmäßigen Betrag nachlaufend versetzt und in den beiden äußeren Bereichen um einen gleichmäßigen Betrag vorlaufend versetzt. Hierdurch ergibt sich im mittleren Bereich der Aufnahmevorrichtung eine gleichmäßige auseinanderziehende Wirkung und in den äußeren Bereichen eine gleichmäßige zusammenziehende Wirkung der Förderzinken auf den Erntegutstrom. Bei den Förderzinken selbst handelt es sich um aus einem Stahldraht hergestellte Doppelfederzinken, bei denen im Mittelbereich zwischen den Federwindungen eine Befestigungsöse vorgesehen ist, mittels derer die Förderzinken auf der Zinkentrommel mit Schrauben befestigt werden. Um ein Verdrehen der Förderzinken auf der Fördertrommel zu verhindern, ist eine zusätzliche Verdrehsicherung vorgesehen.

Die Befestigung der Förderzinken ist an die speziellen Bedürfnisse bekannter Doppelfederzinken mit Befestigungsöse angepasst und für Förderzinken ohne Befestigungsöse ungeeignet.

Aus DE 20 2016 104 504 U1 ist eine Aufnahmevorrichtung mit einer drehantreibbaren Trommel mit einer Vielzahl von an der Trommel angeordneten, über die Mantelfläche der Trommel abstehenden Förderzinken bekannt. Die Förderzinken sind aus einem elastischen Kunststoff hergestellt und derart auf der Trommel verteilt, dass sie nebeneinanderliegende, voneinander beabstandete, Zinken-Ringe bilden. Zwischen den benachbarten Zinken-Ringen sind Zwischenräume zur Aufnahme von Abstreifern vorgesehen. Die Aufnahme und die Förderung des Erntegutes erfolgt durch die umlaufenden Förderzinken, die das Erntegut an der Oberseite der Abstreifer entlangführen und es an nachfolgende Erntegut-Bearbeitungseinrichtungen übergeben.

Die aus DE 20 2016 104 504 U1 bekannte Aufnahmevorrichtung weist eine kreisrunde Trommel auf. Die Förderzinken bilden im montierten Zustand einen geschlossenen Zinkenring, dessen Innendurchmesser an den Außendurchmesser der Trommel angepasst ist. Die Zinkenringe sind mit Schrauben auf der Trommel befestigt.

Nachteilig an dieser Aufnahmevorrichtung ist, dass die Zinkenringe eine geschlossene Kontur ausbilden, die hinsichtlich der Herstellung und ihrer Montage auf der Trommel relativ aufwendig ist. Weiterhin wird die auf die Förderzinken einwirkende Kraft ausschließlich über die Schraubverbindung auf die Trommel übertragen. Die Anbringung einzelner Zinken unabhängig von deren Integration in einen geschlossenen Zinkenring ist nicht vorgesehen.

Aus DE 20 2019 104 058 U1 ist eine Aufnahmevorrichtung für eine Erntemaschine bekannt, die eine Trommel mit darauf angebrachte Förderzinken umfasst. Die Trommel besteht aus aneinandergereihten Segmenten. Die Segmente weisen ein gekantetes Mantelblech (Teilschalen 21, 21') auf, auf welchem Haltebleche zur Befestigung der Förderzinken 13 angebracht sind. Diese Haltebleche weisen U-förmige, nach außen ragende Vorsprünge auf. Die Vorsprünge sind somit aus dem Halteblech gebildet und nicht aus dem darunter liegenden Mantelblech bzw. den Teilschalen 21, 21'. Nachteilig hieran ist, dass zusätzliche Teile, nämlich die Haltebleche, am Trommelmantel angebracht sind, die das Gewicht der Aufnahmevorrichtung und den Fertigungsaufwand zur Herstellung der Trommel erheblich erhöhen. Weiterhin wird eine im Arbeitseinsatz auf die Förderzinken einwirkende Last lediglich von außen auf den Trommelmantel und nicht in den Innenraum der Trommel eingeleitet.

Weiterhin ist aus DE 10 2018 121 273 A1 eine Aufnahmevorrichtung mit auf einer Trommel befestigten Förderzinken bekannt. Mehrere radial auf der Trommel befestigte Förderzinken bilden gemeinsam einen Zinkenring, der auf dem Außenmantel der Trommel angebracht ist. Die Aufnahmevorrichtung umfasst weiterhin Abstreifer, die bei Rotation der Trommel von den an den Zinkenringen vorgesehenen Halterungen überragt werden. Hierdurch wird es möglich, dass das Erntegut von den Abstreifern untergriffen wird. Die im Arbeitseinsatz auf die Förderzinken einwirkende Last wird somit auf die Halterungen und damit auf den Zinkenring und den Außenmantel der Trommel übertragen. Eine Einzelbefestigung eines Förderzinkens unabhängig von anderen Förderzinken beziehungsweise unabhängig von einem Zinkenring ist nicht vorgesehen.

Aufgabe der Erfindung ist es, eine Zinkenbefestigung vorzuschlagen, die im Arbeitseinsatz die auf die Förderzinken einwirkende Last besonders effizient auf die Trommel überträgt und in Herstellung, Montage und Wartung kostengünstig ist.

Diese Aufgabe wird gelöst mit einer Aufnahmevorrichtung mit den Merkmalen des Anspruchs 1.

Ein wesentliches Merkmal der erfindungsgemäßen Aufnahmevorrichtung ist, dass die im Arbeitseinsatz auf die Förderzinken einwirkende Kraft zumindest teilweise in den Innenraum der Trommel eingeleitet wird. Das ist auf verschiedene Weise möglich. Insbesondere kann die Befestigung der Förderzinken mit Zinkenhaltern erfolgen, die ein Einsteckteil umfassen, welches in eine im Trommelmantel vorgesehene Aussparung einsteckbar ist. Die auf den Förderzinken einwirkende Kraft wird demnach auf den Zinkenhalter übertragen, dessen eines Ende sich im montierten Zustand im Inneren der Trommel befindet.

Alternativ oder auch ergänzend kann auch der Förderzinken selbst einen in die Trommel einsteckbaren Befestigungsvorsprung aufweisen. Dieser Befestigungsvorsprung ist - analog zu dem Einsteckteil des Zinkenhalters - durch eine zu diesem Zweck im Trommelmantel vorgesehene Aussparung in die Trommel einsteckbar.

Im Ergebnis ist durch diese Art der Befestigung wenigstens ein Teil einer im Arbeitseinsatz auf die Förderzinken einwirkende Kraft auf den innerhalb der Trommel befindlichen Befestigungsvorsprung und/oder das innerhalb der Trommel befindliche Einsteckteil übertragbar. Dadurch, dass die Befestigungselemente teilweise im Inneren der Trommel angeordnet sind, befinden sich außerhalb der Trommel weniger Teile, an denen sich im Arbeitseinsatz Erntegut festsetzen könnte. Die Gefahr, dass sich Erntegut an aus der Trommel vorstehenden Teilen der Zinkenbefestigung festsetzt, reduziert sich und das Erntegut kann von den Förderzinken widerstandsarm an nachfolgende Einrichtungen der Erntemaschine übergeben werden. Die Förderzinken sind zudem leicht montierbar und im Schadensfall einfach austauschbar.

Die Trommel kann eine runde Kontur oder eine Vieleck-Kontur aufweisen. Bei der Vieleck-Kontur kann es sich um ein regelmäßiges Polygon handeln, bei dem alle Seiten gleich lang und alle Innenwinkel gleich groß sind. Es kann aber auch vorgesehen sein, dass es sich nur um ein im Wesentlichen regelmäßiges Polygon handelt. Unter einem im Wesentlichen regelmäßigen Polygon wird ein Polygon verstanden, bei dem die Flächen zwischen zwei benachbarten Kanten nicht aus einer einzigen Fläche, sondern aus zwei Flächen gebildet werden, die mit einem Innenwinkel von 170° bis 180° zueinander angeordnet sind. Hierdurch ergeben sich Vorteile bei der Befestigung der Zinkenhalter, wie weiter unten noch näher erläutert werden wird.

Grundsätzlich ist die vorgeschlagene Zinkenbefestigung somit universell für runde und eckige Trommeln einsetzbar. Vorzugsweise sind die Förderzinken unmittelbar auf der äußeren Mantelfläche der Trommel angebracht und die Kontaktfläche des Zinkenfußes ist an die Kontur der Trommel angepasst. Bei einer runden Trommel weist der Zinkenfuß somit eine gerundete Kontaktfläche auf, bei einer Vieleckkontur ist die Kontaktfläche flach und der Förderzinken ist flach auf eine ebenfalls flache Teilfläche der Trommel aufsetzbar. Ein Vorteil einer Vieleck-Trommel liegt insbesondere darin, dass sie aus einem flachen Ausgangsmaterial, insbesondere einem flachen Stahlblech, herstellbar ist und sich etwaige, in die Trommel einzubringende, Bohrungen und Ausschnitte einfach und mit hoher Genauigkeit mit entsprechenden Bearbeitungsmaschinen in das Blech einarbeiten lassen. Beim nachfolgenden Kanten entsteht, anders als beim Rundwalzen, kein Verzug in den eingebrachten Bohrungen und Ausschnitten.

Die Zinkenhalter, die mit ihrem einen Ende in die Trommel einsteckbar sind, weisen an ihrem anderen Ende ein Klemmteil auf, dass den Zinkenfuß im montierten Zustand auf der Trommel festklemmt. Vorzugsweise ist die Kontur des Klemmteils an eine am Zinkenfuß vorgesehene U-förmige Kontur angepasst ist, so dass das Klemmteil und der Zinkenfuß einander im montierten Zustand formschlüssig kontaktieren. Die formschlüssige Kontur bildet eine Verdrehsicherung aus und verhindert, dass der Zinkenfuß bei etwaigen auf den Förderzinken einwirkenden Querkräften zur Seite hin aus der Klemmverbindung ausbricht.

Alternativ zu einer formschlüssigen Verbindung auf Basis einer U-förmigen Kontur können aber auch andere Konturen vorgesehen sein, beispielsweise eine V-förmige Kontur oder eine zylindrische Kontur des Klemmteils, die in eine äußere Halbrundform am Zinkenfuß oder eine im Zinkenfuß vorgesehene Bohrung einsteckbar ist.

Vorzugsweise wird die formschlüssige Kontaktierung von Klemmteil und Zinkenfuß durch zwei am Zinkenfuß vorgesehene Stege ausgebildet, welche das Klemmteil im montierten Zustand umgreifen. Stege und Zinkenhalter lassen sich zudem so aneinander anpassen, dass Übergänge fließend sind und eine gemeinsame Außenkontur ausgebildet wird, an der das Erntegut widerstandsarm entlanggleiten kann.

Vorzugsweise weist das Klemmteil des Zinkenhalters eine größere Breite auf, als die im Trommelmantel vorgesehene Aussparung. Das Klemmteil des Zinkenhalters ist somit breiter als das Einsteckteil des Zinkenhalters. Hierdurch erleichtert sich die Montage. Der Zinkenhalter kann somit allenfalls dann in das Innere der Trommel, wenn die Diagonale der Aussparung größer ist als die Breite des Klemmteils. Üblicherweise wird das Einsteckteil des Zinkenhalters jedoch rechtwinklig zur Aussparung eingesetzt. Höchst vorzugsweise ist die Stelle, ab der sich der Zinkenhalter verbreitert, so platziert, dass sie als Anschlag zur Bestimmung der richtigen Einstecktiefe dienen kann. Ein Monteur kann den Zinkenhalter somit so weit in die Trommel einstecken, bis die Verbreiterung des Klemmteils auf dem Trommelmantel aufsetzt und den Zinkenhalter dann, beispielsweise mittels einer zur Befestigung vorgesehenen Schraube, fixieren.

Zur Befestigung des Zinkenhalters kann dessen Einsteckteil eine Gewindebohrung aufweisen, die in Einbaulage mit einer im Trommelmantel vorgesehenen Gewindebohrung koinzidiert. Durch die Bohrung im Trommelmantel ist dann eine Schraube einsteckbar, die in die Gewindebohrung des Zinkenhalters eindrehbar ist, so dass mittels der Schraube der Zinkenhalter und damit der Förderzinken auf der Trommel fixierbar ist.

Vorzugsweise sind die Bohrungen, und damit auch die Befestigungsschrauben, mit denen die Zinkenhalter fixiert werden, radial hinter den Förderzinken angebracht und befinden sich damit quasi in deren Windschatten. Bei in dieser Position angebrachten Befestigungsmitteln ist die Gefahr, dass Erntegut sich bei der Ernte an den Befestigungsmitteln verfängt, weitgehend eliminiert. Um diese Gefahr noch weiter zu reduzieren, kann es sich bei den Bohrungen um Senkbohrungen handeln, in welche die Schraubenköpfe, beispielsweise Senkkopfschrauben mit einem Innensechskant, aufgenommen werden, so dass die Befestigungsschrauben die Mantelfläche der Trommel nicht überragen.

In einer bevorzugten Ausführung liegt das Klemmteil des Zinkenhalters im montierten Zustand am Zinkenfuß an, während gleichzeitig zwischen der Innenfläche des Trommelmantels und dem Einsteckteil ein Spalt vorgesehen ist. Weiterhin gleichzeitig kontaktiert der Zinkenhalter am Übergang von Klemmteil zu Einsteckteil eine Kante der im Trommelmantel befindlichen Aussparung. Bei Eindrehen der Schraube in die Gewindebohrung des Zinkenhalters wird das innerhalb der Trommel befindliche Einsteckteil des Zinkenhalters somit in Richtung Trommelmantel gezogen. Der Zinkenhalter stützt sich an der Kante der Aussparung gegen die Trommel ab und übt im Bereich des Klemmteils eine Anpresskraft auf die Förderzinken aus. Um diesen Effekt zu erreichen, kann vorgesehen sein, dass die Kontur der Trommel nicht als exakt regelmäßiges Polygon, sondern lediglich als im Wesentlichen regelmäßiges Polygon ausgebildet ist.

Insbesondere kann sich zwischen der Aussparung, durch die das Einsteckteil des Zinkenhalters in die Trommel gesteckt wird, und der Bohrung für die Befestigungsschraube eine Abkantung vorgesehen sein, die vorzugsweise einen Innenwinkel von 165° bis 179° aufweist. Hierdurch wird erreicht, dass der zweite Halter im montierten Zustand mit seinem einen Ende gegen den Förderzinken drückt, in seinem mittleren Bereich an der Kante der Aussparung anliegt, und mit seinem in der Trommel befindlichen Ende von der inneren Mantelfläche der Trommel beabstandet ist. Bei Eindrehen einer Schraube wird das in der Trommel befindliche Ende des zweiten Halters in Richtung Trommelmantel gezogen. Diese Kraft wird über die Kontaktkante wippenartig auf das Klemmteil übertragen und wirkt als Anpresskraft auf den Förderzinken.

Der Zinkenfuß wird somit zwischen Trommelmantel und Zinkenhalter-Klemmteil eingeklemmt. Im Ergebnis ergibt sich hierdurch eine sichere und dennoch bei Bedarf leicht lösbare Befestigung des Förderzinkens auf der Trommel.

Die Aufnahmevorrichtung kann eine Trommel aufweisen, in deren Trommelmantel Konturschnitte eingebracht sind. Die Konturschnitte bilden eine nur teilweise geschlossene, beispielsweise V-förmige oder U-förmige Kontur aus. Die innerhalb eines Konturschnitts angeordneten Bereiche sind gegenüber dem übrigen Trommelmantel verformt und bilden Stützlager für die Förderzinken aus. Sie setzen die Kontur des Trommelmantels somit nicht fort, sondern überragen diesen vielmehr nach innen oder außen. Es handelt sich bei den Stützlagern somit um Teilbereich des Trommelmantels, die entweder in die Trommel eingedrückt oder aus der Trommel herausgedrückt sind. In beiden Fällen ist es möglich, Förderzinken im Bereich des Zinkenfußes mit einer entsprechend angepassten Kontur zu versehen und das Stützlager dann als Halter für den Zinkenfuß zu nutzen. Dadurch, dass die Stützlager die Mantelfläche nach innen oder außen überragen, können sie Anschläge für unmittelbar davor oder dahinter angebrachte Förderzinken ausbilden.

Im Arbeitseinsatz, bei Rotation der Trommel, werden die Förderzinken somit durch die Stützlager gehalten. Vorzugsweise ist die Halterung so konzipiert, dass sich bei im Arbeitseinsatz rotierender Trommel die Förderzinken, in Drehrichtung der Trommel gesehen, vor den Konturelementen befinden, so dass die Förderzinken sich bei der Aufnahme des Ernteguts und der hieraus resultierenden Last gegen die Stützlager abstützen.

Besonders bevorzugt ist es, wenn der Zinkenfuß auf seiner einen Seite durch das aus dem Trommelmantel gebildete Stützlager und auf seiner anderen Seite durch den weiter oben schon beschriebenen, in die Trommel einsteckbaren, Zinkenhalter gehalten wird.

Alternativ zu der Ausbildung von Stützlagern durch Konturschnitte können auch auf dem Trommelmantel angebrachte Halter vorgesehen sein. Diese Halter können die Funktion der Stützlager übernehmen, sind jedoch nicht aus dem Mantelblech geformt, sondern als zusätzliche Teile auf der Trommel befestigt, beispielsweise aufgeschraubt oder aufgeschweißt.

Bei einer bevorzugten Ausführungsform der Aufnahmevorrichtung:
- sind die Förderzinken an der Trommel derart verteilt, dass sie nebeneinanderliegende, voneinander beabstandete Zinken-Ringe bilden, wobei zwischen benachbarten Zinken-Ringen Zwischenräume zur Aufnahme von Abstreifern vorgesehen sind,
- bilden in Achsrichtung der Trommel benachbart angeordneten Förderzinken Zinkengruppen, bei welchen die Förderzinken einen radialen Versatz zueinander von 0° aufweisen,
- sind benachbarte Zinkengruppen ausgehend von der im mittleren Bereich der Trommel angeordneten, mittleren Zinkengruppe nachlaufend versetzt angeordnet und
- weisen wenigstens zwei Zinkengruppen (Z1, Z2, Z3, ..., Zn) eine unterschiedliche Anzahl von Förderzinken (13) auf.

Die Förderzinken einer Förderzinkengruppe sind somit auf einer Linie angeordnet, die parallel zur Mittelachse der Trommel verläuft.

Im Gegensatz zu den einzelnen Zinken einer Zinkengruppe sind die Zinkengruppen selbst, ausgehend von der im mittleren Bereich der Trommel angeordneten mittleren Zinkengruppe, nachlaufend versetzt angeordnet. Durch die versetzte Anordnung der Zinken wird auf das aufzunehmende Erntegut ein Breitzieheffekt ausgeübt. Hintergrund ist, dass Erntegut in aller Regel schwadförmig auf dem Boden liegt und in ihrem mittleren Bereich am massereichsten sind. Durch den Breitzieheffekt wird der Schwad somit in gewissem Umfang egalisiert.

In einer bevorzugten Ausführungsform weisen wenigstens zwei Zinkengruppen eine unterschiedliche Anzahl von Förderzinken auf. Aus der Bildung von Förderzinkengruppen mit unterschiedlicher Zinkenanzahl kann die Intensität des Breitzieheffektes in Längsrichtung der Trommel variiert und damit bedarfsgerecht angepasst werden. Dabei kann von der Grundregel ausgegangen werden, dass der Breitzieheffekt umso stärker ist, je kleiner die Anzahl Förderzinken einer Zinkengruppe ist. Eine Zinkengruppe mit lediglich einem Förderzinken hat somit den größten Breitzieheffekt. Im anderen Extremfall, wenn alle in Achsrichtung benachbarten Förderzinken einer Aufnahmevorrichtung keinen radialen Versatz haben und somit eine sich über die gesamte Trommelbreite erstreckende Zinkengruppe bilden, ist kein Breitzieheffekt vorhanden.

In einer bevorzugten Ausführungsform umfasst die im mittleren Bereich der Trommel angeordnete Zinkengruppe eine kleinere Anzahl Förderzinken als deren Nachbarzinkengruppen, so dass durch die mittlere Zinkengruppe mit der kleineren Zahl an Förderzinken ein stärkerer Breitzieheffekt auf das Erntegut bewirkt wird als von den Nachbarzinkengruppen. Da der aufzunehmende Futterschwad in aller Regel im mittleren Bereich besonders dick ist, beziehungsweise das größte Volumen aufweist, wirkt sich ein Breitzieheffekt, der in der Mitte besonders groß ist, positiv auf das angestrebte Ziel, nämlich eine Vergleichmäßigung des Erntegutstroms, aus.

Alternativ oder zusätzlich kann vorgesehen sein, dass die in den Außenbereichen der Aufnahmevorrichtung angeordneten Zinkengruppen eine größere Anzahl von Förderzinken umfassen als deren Nachbarzinkengruppen, so dass durch die größere Zahl an Förderzinken in den Außenbereichen ein Breitzieheffekt auf das Erntegut reduziert oder verhindert wird. Hierdurch wird erreicht, dass das an den Seiten eines Futterschwads liegende Erntegut nicht aus dem Einzugsbereich der Aufnahmevorrichtung herausgefördert wird.

Benachbarte Zinkengruppen weisen vorzugsweise einen radialen Versatz von 5° bis 25°, höchstvorzugsweise von 13° bis 17°, zueinander auf. Hierdurch wird einerseits der gewünschte Breitzieheffekt realisiert. Andererseits wird die aus dem radialen Versatz benachbarter Förderzinken resultierende Belastung dieser Förderzinken auf eine Größe beschränkt, die von den benachbarten Förderzinken verarbeitet werden kann ohne dabei Schaden zu nehmen.

Es kann vorgesehen sein, dass der radiale Versatz benachbarter Zinkengruppen variiert, insbesondere im mittleren Bereich der Trommel größer ist als zu den Außenbereichen hin. Hieraus resultiert ein im mittleren Bereich verstärkter und zu den Außenbereichen hin reduzierter Breitzieheffekt auf das Erntegut. Auch diese Maßnahme trägt dazu bei, dass der Breitzieheffekt dort, wo er am Nötigsten gebraucht wird, nämlich in der Mitte des Futterschwads, besonders stark ist.

Die Trommel kann einstückig gefertigt sein. In einer bevorzugten Ausführungsform umfasst sie jedoch wenigstens drei Einzelsegmente, nämlich ein mittleres Segment und zwei Seitensegmente. Der Vorteil des segmentierten Aufbaus liegt insbesondere darin, dass sich die einzelnen Segmente einfach vorfertigen lassen. Die Segmente lassen sich zu unterschiedlichen Trommeln kombinieren und weisen eine hohe Zahl von Gleichteilen auf. Fertigungstechnisch ist es darüber hinaus günstig, dass die Mantelteile der Trommel, die in der Regel aus Stahlblech hergestellt werden, auf kostengünstige Art als Kantteile herstellbar sind und nicht zu einer runden Form gewalzt werden müssen.

Die Anzahl der Segmente einer Trommel ist vorzugsweise ungerade, so dass eines der Segmente ein Mittelteil einer Trommel bildet und sich an diesem Mittelteil zu beiden Seiten hin eine gleiche Anzahl weiterer Segmente anschließt. Die Trommel insgesamt ist vorzugsweise zu ihrer quer durch den Mittelteil verlaufenden Mittelebene symmetrisch ausgebildet.

Die Breite der einzelnen Segmente ist vorzugsweise an die Anzahl der Förderzinken der jeweiligen Zinkengruppe angepasst, so dass alle auf einem Segment angeordneten und in Achsrichtung der Trommel nebeneinander benachbarten Förderzinken einen radialen Versatz zueinander von 0° aufweisen. Vereinfacht gesagt bilden die Förderzinken eines Segmentes somit linien- beziehungsweise kammartige Strukturen ohne radialen Zinkenversatz. Die Förderzinken einer Zinkengruppe bzw. eines Segmentes mit gleichen Zinkengruppen haben selbst somit keinen Breitzieheffekt. Der Breitzieheffekt resultiert vielmehr aus dem radialen Versatz der Zinkengruppen zueinander.

In einer bevorzugten Ausführungsform weist die Trommel, oder die die Trommel bildenden Segmente, Mantelflächen auf, die aus wenigstens zwei gekanteten Teilschalen gebildet werden. Solche Teilschalen lassen sich einfach herstellen und montieren und reduzieren die Fertigungskosten. Die Teilschalen werden vorzugweise miteinander verschweißt.

Die Aufnahmevorrichtung umfasst weiterhin Förderzinken, die aus einem elastischen Kunststoff gefertigt sind und eine Verdrehsicherung umfassen. Bei den Förderzinken kann es sich um Einzelzinken oder um Mehrfachzinken, insbesondere um sogenannte Doppelzinken, handeln. Doppelzinken weisen zwei Zinkenspitzen auf. Die aus einem elastischen Kunststoff gefertigten Förderzinken können sich unter Lasteinwirkung verformen und nehmen nach Beendigung der Lasteinwirkung wieder ihre ursprüngliche Form an.

Der Zinkenfuß der Förderzinken umfasst wenigstens eine an die Stützlager und/oder die Zinkenhalter und/oder die Haltebleche angepasste Kontur zur Ausbildung einer Verdrehsicherung. Vorzugsweise werden die Förderzinken mittels einer Klemmverbindung auf der Trommel fixiert. Die insofern vorgesehenen Befestigungselemente sind vor und/oder hinter dem Förderzinken angeordnet. Sie üben eine Anpresskraft auf den Zinkenfuß aus und blockieren gleichzeitig eine Bewegung des Zinkens auf der Trommel in radialer Richtung. Da vom Erntegut unter ungünstigen Bedingungen auch Seitenkräfte auf die Förderzinken einwirken können, können die Förderzinken dann, wenn die Seitenkraft größer als die Klemmkraft ist, zur Seite hin aus der Klemmverbindung ausbrechen. Um ein solches seitliches Ausbrechen zu verhindern, umfasst die Klemmverbindung vorzugweise einen formschlüssigen Bereich in dem sich der Förderzinken gegen die zur Befestigung vorgesehenen Elemente abstützt.

Besonders bevorzugt ist, dass der Förderzinken selbst wenigstens eine, vorzugsweise U-förmige, Kontur umfasst, die an die Kontur des Befestigungselements angepasst ist. Bei Einwirken einer Seitenkraft auf den Förderzinken wird der Förderzinken somit nicht nur durch die Klemmkraft gehalten, der Förderzinken stützt sich vielmehr zur Seite hin mechanisch gegen das Befestigungsmittel ab. Das Befestigungsmittel bildet somit eine zusätzliche Verdrehsicherung aus, die ein seitliches Ausbrechen des Förderzinkens verhindert.

In einer bevorzugten Ausführungsform umfasst der Förderzinken einen Zinkenfuß mit einem Befestigungsvorsprung, welcher in das Innere der Trommel einführbar ist, so dass sich der Förderzinken im Arbeitseinsatz im Bereich des Befestigungsvorsprungs gegen die Trommel abstützt und wenigstens ein Teil der auf den Förderzinken einwirkenden Kraft auf die Trommel übertragbar ist. Ein solcher Förderzinken lässt sich besonders einfach montieren indem er mit seinem Befestigungsvorsprung in eine dafür vorgesehene Aussparung der Trommel eingesetzt wird. Der Befestigungsvorsprung kann aus demselben elastischen Kunststoffmaterial bestehen wie der Förderzinken insgesamt. Zur weiteren Erhöhung der Festigkeit kann alternativ auch ein anderes Material zur Ausbildung des Befestigungsvorsprungs vorgesehen sein, beispielsweise kann der Förderzinken als Gußteil hergestellt und bei der Herstellung ein den Befestigungsvorsprung ausbildendes Einlegeteil, beispielsweise ein Blechstreifen, eingelegt und unlösbar mit dem Förderzinken verbunden werden. Alternativ dazu ist es natürlich auch möglich, dass den Befestigungsvorsprung ausbildende Teil anders am Förderzinken zu befestigen, beispielsweise aufzukleben oder aufzuschrauben.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt eine einstückige Trommel für eine Ernte- oder Aufsammelmaschine mit aufmontierten Förderzinken;
- Fig. 2: zeigt die Trommel aus Fig. 1 ohne Förderzinken;
- Fig. 3: zeigt eine erste Ausführungsform eines Segmentes einer Trommel mit einem aufmontierten Zinkenring;
- Fig. 4: zeigt einen Schnitt durch den Zinkenring gemäß Fig. 3;
- Fig. 5: zeigt einen Ausschnitt aus Fig. 4;
- Fig. 6: zeigt einen Förderzinken in einer ersten Ausführungsform in einer Ansicht von schräg vorne;
- Fig. 7: zeigt einen Förderzinken in einer ersten Ausführungsform in einer Ansicht von schräg hinten;
- Fig. 8: zeigt ein Halteblech für einen Förderzinken in einer perspektivischen Ansicht;
- Fig. 9: zeigt den Halter gemäß Fig. 8 in einer Ansicht von vorne;
- Fig. 10: zeigt einen Zinkenhalter für einen Förderzinken in einer perspektivischen Ansicht;
- Fig. 11: zeigt den Zinkenhalter gemäß Fig. 10 in einer Ansicht von vorne;
- Fig. 12: zeigt eine zweite Ausführungsform eines Segmentes einer Trommel mit einem aufmontierten Zinkenring;
- Fig. 13: zeigt einen Schnitt durch den Zinkenring gemäß Fig. 12;
- Fig. 14: zeigt einen Ausschnitt aus Fig. 13;
- Fig. 15: zeigt eine dritte Ausführungsform eines Segmentes einer Trommel mit einem aufmontierten Zinkenring;
- Fig. 16: zeigt einen Schnitt durch den Zinkenring gemäß Fig. 15;
- Fig. 17: zeigt einen Ausschnitt aus Fig. 16;
- Fig. 18: zeigt einen Förderzinken in einer zweiten Ausführungsform in einer Ansicht von schräg vorne;
- Fig.19: zeigt einen Förderzinken in einer zweiten Ausführungsform in einer Ansicht von schräg hinten;
- Fig. 20: zeigt eine vierte Ausführungsform eines Segmentes einer Trommel mit einem aufmontierten Zinkenring;
- Fig. 21: zeigt einen Schnitt durch den Zinkenring gemäß Fig. 20;
- Fig. 22: zeigt einen Ausschnitt aus Fig. 21;
- Fig. 23: zeigt eine Aufnahmevorrichtung mit in Gruppen angeordneten Förderzinken in einer perspektivischen Ansicht;
- Fig. 24: zeigt die Aufnahmevorrichtung aus Fig. 23 in einer Draufsicht;
- Fig. 25: zeigt die Aufnahmevorrichtung in einer Schnittdarstellung gemäß einer in Fig. 24 enthaltenen Schnittlinie;
- Fig. 26: einen Teilbereich der in Fig. 25 abgebildeten Schnittdarstellung in einer Vergrößerung;
- Fig. 27: zeigt eine in Segmentbauweise hergestellte Trommel;
- Fig. 28: zeigt einen Teilbereich einer in Segmentbauweise hergestellten Trommel mit einem teilweise demontierten Segment;
- Fig. 29: zeigt ein Segment in einer perspektivischen Ansicht;
- Fig. 30: zeigt das Segment gemäß Fig. 29 in einer Vorderansicht;
- Fig. 31: zeigt das Segment gemäß Figur 30 in einer Seitenansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten.

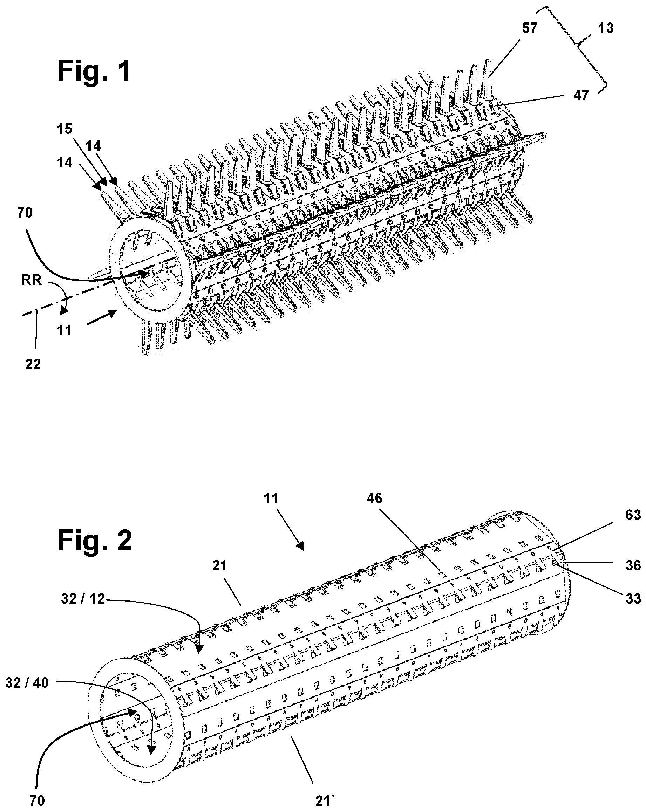

Fig. 1 zeigt eine einstückig ausgebildete Trommel 11 für eine Ernte- oder Aufsammelmaschine mit aufmontierten Förderzinken 13. Die Förderzinken 13 umfassen einen Zinkenfuß 47 und einen Einzelzinken 57. Jeweils sechs Zinken 13 sind in Rotationsrichtung RR hintereinander angeordnet und bilden jeweils einen Zinkenring 14. Zwischen den Zinkenringen 14 befindet sich jeweils ein Zwischenraum 15, der für in Fig. 1 nicht dargestellte Abstreifer vorgesehen ist.

Fig. 2. zeigt die Trommel 11 gemäß Fig. 1 ohne Förderzinken. Die Trommel 11 ist in diesem Ausführungsbeispiel aus zwei Teilschalen 21, 21' hergestellt, die, in Längsrichtung der Trommel gesehen, ein einziges Segment ausbilden und aus Blechzuschnitten hergestellt sind. Im dargestellten Beispiel sind in die Blechzuschnitte zunächst Bohrungen 63, Aussparungen 46 und Konturschnitte 33 eingebracht worden. Die Blechzuschnitte sind durch Abkanten zu einer Vieleck-Kontur umgeformt. Gemeinsam ergeben die gekanteten Teilschalen 21, 21' eine Vieleckkontur in Form eines unregelmäßigen Polygons. Die Kantungen sind so durchgeführt worden, dass die von einem Konturschnitt 33 umgebenden Bereiche nicht umgeformt sind, sondern vielmehr nach dem Abkanten den Trommelmantel 32 überragen und so Stützlager 36 ausbilden, gegen die sich im montierten Zustand die Förderzinken 13 abstützen.

Die Trommel 11 umfasst einen Trommelmantel 32 mit einer inneren Mantelfläche 40 und einer äußeren Mantelfläche 12. Die innere Mantelfläche 40 umgibt somit einen Innenraum 70 der Trommel 11.

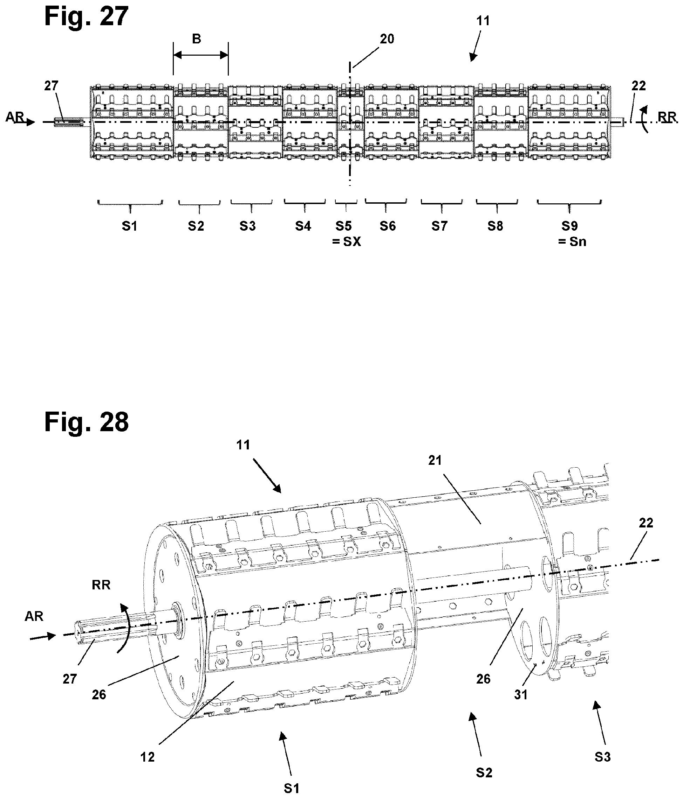

Wie später noch beschrieben wird, kann die Trommel 11 alternativ zu der in den Figuren 1 und 2 dargestellten einstückigen Ausführungsform in Längsrichtung gesehen auch aus mehrere Teilsegmente hergestellt sein. Mehrere in Längsrichtung nebeneinander gesetzte Segmente können dann zu einer Trommel miteinander verbunden werden (vgl. Fig.27 und 28).

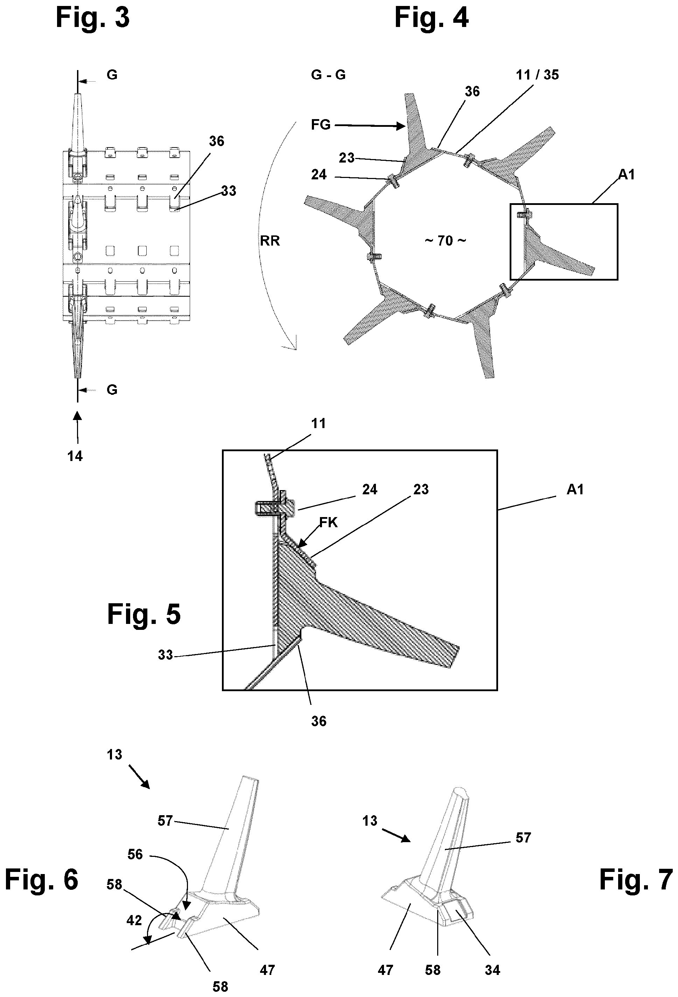

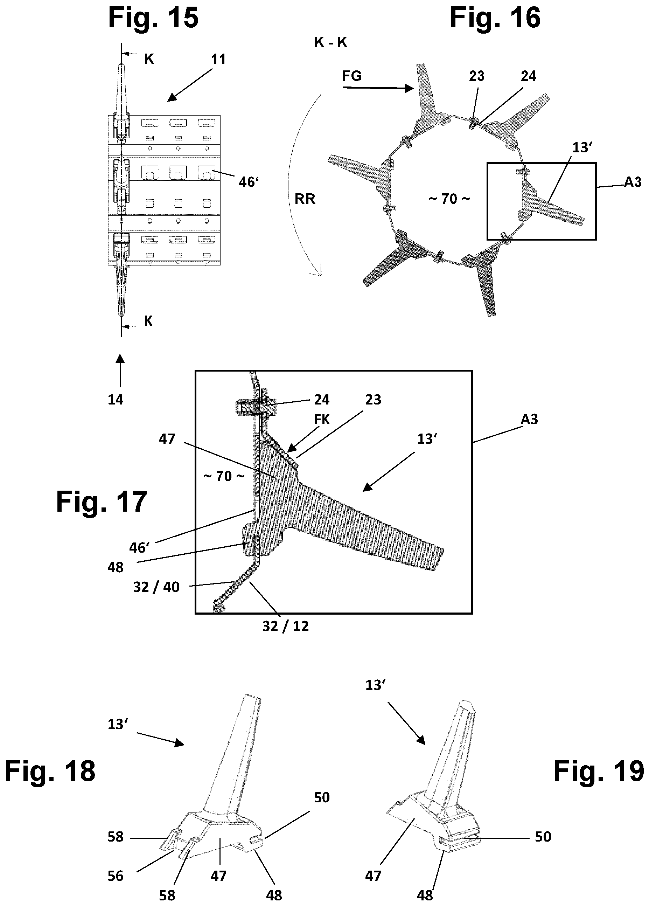

Die Förderzinken können auf unterschiedliche Weise und mit unterschiedlichen Befestigungsmittel auf der Trommel 11 befestigt sein. In den Figuren 3 bis 5, 12 bis 14, 15 bis 17 und 20 bis 22 sind vier Ausführungsbeispiele für zwei Arten von Förderzinken 13, 13' dargestellt. Die Förderzinken 13' unterscheiden sich durch einen zusätzlich am Zinkenfuß 47 angebrachten Befestigungsvorsprung 48 von den Förderzinken 13 (vgl. Fig. 18 und 19).

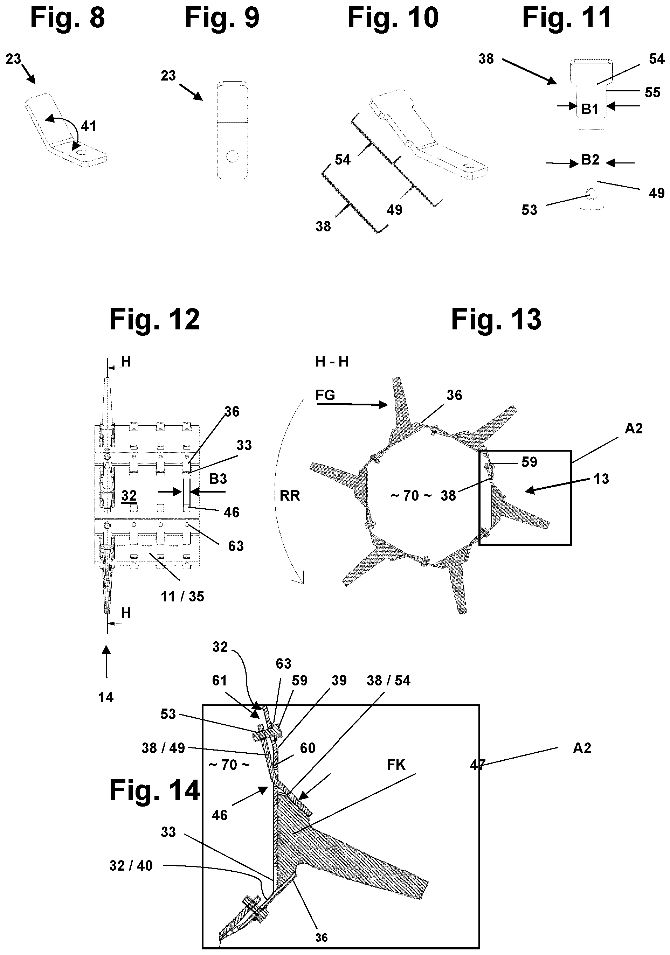

Bei dem ersten Ausführungsbeispiel gemäß der Figuren 3 bis 5 handelt es sich um ein nicht beanspruchtes Ausführungsbeispiel. Bei diesem Ausführungsbeispiel weist der Förderzinken 13 keinen Befestigungsvorsprung auf. Im montierten Zustand wird der Förderzinken von einem Halteblech 23 (vgl. Fig. 8 und 9) und dem Stützlager 36 gehalten. Das Halteblech 23 umfasst eine Abkantung und weist einen Winkel (41) auf, der geringfügig größer ist als ein an der Kontur 56 des Zinkenfußes 47 vorgesehener Winkel 42. Beim Festdrehen der Schraube drückt das Klemmteil des Halteblechs somit auf den Zinkenfuß 47.

Die Figuren 6 und 7 zeigen den Förderzinken 13 im Detail. Der Zinkenfuß 47 umfasst in seinem vorderen Bereich eine U-förmige Kontur 56, die durch zwei vorstehende Stege 58 ausgebildet ist. Analog dazu ist im hinteren Bereich des Förderzinkens 13 ebenfalls eine U-förmige Kontur 34 vorgesehen. Im montierten Zustand greifen die Haltebleche 23 und die Stützlager 36 in die U-förmigen Konturen ein und klemmen den Förderzinken fest. Stege 58 und Haltebleche 23 bzw. Stützlager 36 bilden miteinander eine formschlüssige Verbindung. Hat eine im Arbeitseinsatz auf die Förderzinken 13 einwirkenden Kraft FG eine Seitenkomponente, verhindern die Stege 58 ein seitliches Ausbrechen der Förderzinken 13 und bilden somit eine Verdrehsicherung aus.

Bei dem zweiten Ausführungsbeispiel gemäß der Figuren 12 bis 14 weist der Förderzinken 13 ebenfalls keinen Befestigungsvorsprung auf. Analog zum ersten Ausführungsbeispiel wird der Förderzinken in seinem hinteren Bereich durch das aus dem Mantelblech gebildete Stützlager 36 gehalten. Nach vorne hin wird der Zinken durch einen Zinkenhalter 38 gehalten. Der Zinkenhalter 38 ist aus einem Blechzuschnitt hergestellt. Eine Abkantung unterteilt den Zinkenhalter 38 in einen Einsteckteil 49 und ein Klemmteil 54 (vgl. Fig. 10). Das Einsteckteil 49 weist eine Breite B2 auf, die kleiner ist als eine Breite B3 der in den Trommelmantel 32 eingebrachten Aussparung 46. Der Zinkenhalter 38 ist somit durch die Aussparung 46 in die Trommel 11 einsteckbar. Ein Teil des Zinkenhalters 38, nämlich das Einsteckteil 49, ragt somit im montierten Zustand in den Innenraum 70 der Trommel 11.

Im Gegensatz zum Einsteckteil 49 hat das Klemmteil 54 des Zinkenhalters 38 eine Breite B1, die größer ist als die Breite B3. Der Beginn der Verbreiterung des Klemmteiles 54 ist so festgelegt, dass der Zinkenhalter 38 bei der Montage bis an den durch die Verbreiterung gebildeten Anschlag in die Trommel einsteckbar ist und in dieser Position eine in den Zinkenhalter eingebrachte Gewindebohrung 53 mit einer der im Trommelmantel 32 eingebrachten Bohrung koinzidiert. Eine Befestigungsschraube 59, die durch die Bohrung 63 in den Trommelmantel 32 eingesteckt wird, lässt sich so sehr einfach in die Gewindebohrung 53 eindrehen.

Der Trommelmantel 32 weist zwischen der Bohrung 63 und der Aussparung 46 eine Kantung 39 auf. Durch die Kantung 39 liegen Bohrung 63 und Aussparung 46 nicht mehr in derselben Ebene. Dies hat den Vorteil, dass das in den Trommelmantel 32 eingeführte Einsteckteil des Zinkenhalters 38 sich gegen eine Kante 60 der Aussparung 46 abstützten kann. Im vormontierten Zustand liegt das Klemmteil 54 zunächst an der Kontur 56 des Zinkenfußes 47 an, während das im Innenraum 70 befindliche Einsteckteil 48 durch einen Spalt 61 von der inneren Mantelfläche 40 der Trommel 11 beabstandet ist. Bei Anziehen der Schraube 59 wird somit das Einsteckteil 49 in Richtung der inneren Mantelfläche 32 gezogen und eine Anpresskraft FK auf den Zinkenfuß 47 ausgeübt.

Bei dem dritten Ausführungsbeispiel gemäß der Figuren 15 bis 17 weist der Förderzinken 13' einen Befestigungsvorsprung 48. Zwischen Befestigungsvorsprung 48 und der Grundfläche des Zinkenfußes 47 befindet sich ein Spalt 50, der an die Dicke des Mantelblechs 32 angepasst. Ist. Die Trommel 11 weist Aussparungen 46' auf, in die der Befestigungsvorsprung 48 in den Innenraum 70 der Trommel 11 einsteckbar und mit dem Spalt 50 auf das Mantelblech 32 aufsteckbar ist. Zur Erhöhung der Festigkeit kann zusätzlich ein Stützlager in das Mantelblech 32 eingearbeitet sein (nicht dargestellt).

Im in Rotationsrichtung RR vorderen Bereich des Zinkenfußes ist analog zum Zinken 13 eine U-förmige Kontur 56 vorgesehen, die als Anlagefläche für ein Halteblech 23 dient. Das Halteblech 23 ist auf die äußere Mantelfläche 12 der Trommel 11 aufgeschraubt und übt im montierten Zustand eine Anpresskraft FK auf den Zinkenfuß 47 aus.

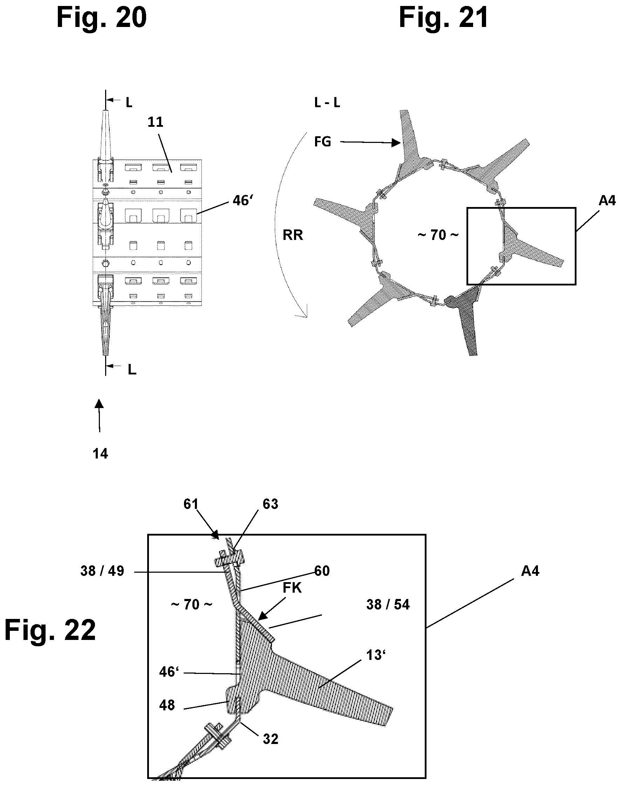

Bei dem vierten Ausführungsbeispiel gemäß der Figuren 20 bis 22 ist ebenfalls ein Förderzinken 13' mit einem Befestigungsvorsprung 48 vorgesehen, welcher im montierten Zustand in den Innenraum 70 der Trommel 11 hineinragt. Im Gegensatz zum dritten Ausführungsbeispiel wird der Förderzinken 13' in seinem vorderen Bereich nicht durch ein Halteblech 23, sondern durch einen Zinkenhalter 38 gehalten. Funktion und Anbringung des Zinkenhalters 38 entsprechen der Funktion und der Anbringung des Zinkenhalters 38 im zweiten Ausführungsbeispiel.

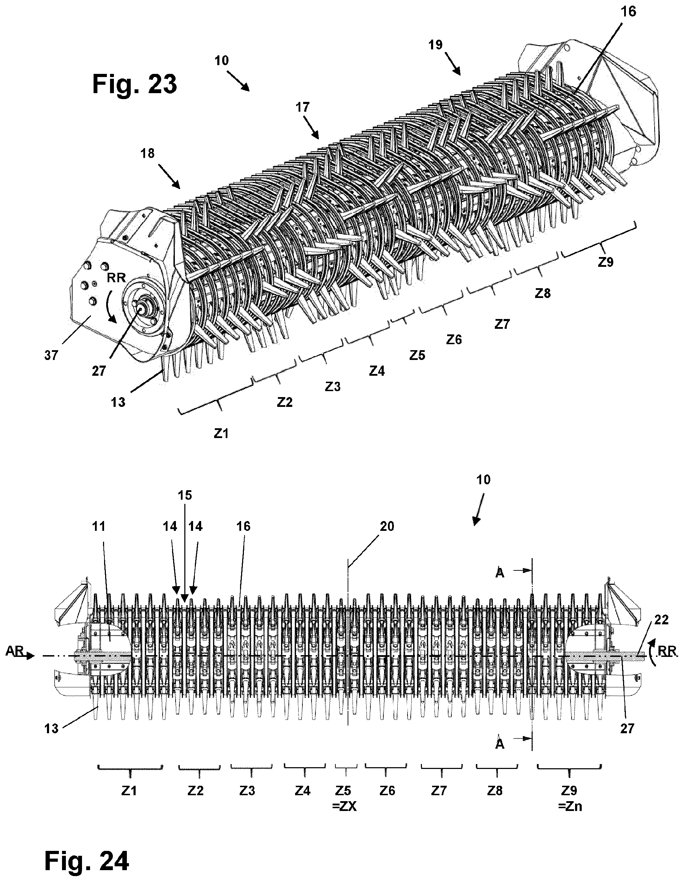

Fig. 23 zeigt eine Aufnahmevorrichtung 10 mit einer Trommel 11 und in Zinkengruppen Z1 bis Zn auf der Trommel 11 angeordneten Förderzinken 13 in einer perspektivischen Ansicht. Die Trommel 11 ist im Arbeitseinsatz über eine Antriebswelle 27 in Rotationsrichtung RR antreibbar. Fig. 24 zeigt diese Aufnahmevorrichtung 10 in einer Draufsicht. Die Aufnahmevorrichtung 10 ist an eine in den Figuren nicht dargestellte Ernte- oder Aufsammelmaschine anbaubar und dazu vorgesehen, im Arbeitseinsatz Erntegut von einer Feld- oder Wiesenfläche oder sonstiges Sammelgut von einem Boden aufzunehmen. Die Trommel 11 kann einen durchgängigen Trommelkörper aufweisen oder aus mehreren, miteinander verbundenen Segmenten S1 bis Sn gebildete werden.

Bei dem Ausführungsbeispiel gemäß Fig. 23 bilden jeweils sechs in Rotationsrichtung RR hintereinander angeordnete Förderzinken 13 einen Zinkenring 14. Selbstverständlich kann, je nach Gesamt-Konzeption der Trommel 11, ein Zinkenring 14 auch eine kleinere oder größere Anzahl von Förderzinken 13 umfassen. Zwischen jeweils zwei Zinkenringen 14 ist in dafür vorgesehenen Zwischenräumen 15 jeweils ein feststehender Abstreifer 15 angeordnet.

Im Arbeitseinsatz rotiert die Trommel 11 in Rotationsrichtung RR um die Drehachse 22. Die an der Trommel 11 fixierten Förderzinken 13 ergreifen auf dem Boden liegendes Erntegut und fördern es in Richtung hier nicht dargestellter, nachgelagerter Arbeitsaggregate der Ernte- oder Aufsammelmaschine zu. Um das Erntegut diesen Aggregaten zuzuführen, sind zwischen den Zinkenringen 14 feststehende Abstreifer 16 vorgesehen. Bei Rotation der Trommel 11 tauchen die Förderzinken 13 im hinteren Bereich der Aufnahmevorrichtung 10 zwischen den Abstreifern 16 ab und geben das Erntegut damit zur Weiterförderung frei.

Im dargestellten Ausführungsbeispiel sind die Förderzinken 13 in den Außenbereichen 18 und 19 der Trommel 11 zu jeweils sechs Zinkenringe 14 so angeordnet, dass die in Achsrichtung AR benachbart angeordnete Förderzinken 13 keinen radialen Versatz zueinander aufweisen. Solche sechs in Achsrichtung AR benachbarten Förderzinken 13 bilden jeweils eine Zinkengruppe Z1 beziehungsweise Z9. Da jeder der sechs Zinkenringe 14 sechs radial hintereinander angeordnete Förderzinken 13 umfasst, ergeben sich somit an dieser Trommel 11 zwei Zinkengruppen Z1 mit jeweils insgesamt sechsunddreißig Förderzinken 13.

Die den Außenbereichen 18 und 19 benachbarten Bereiche der Trommel umfassen lediglich vier Zinkenringe 14 mit Förderzinken 13 ohne radialen Versatz. In diesen Bereichen sind somit insgesamt sechs Zinkengruppen Z2 bis Z4 und Z6 bis Z8 mit jeweils vier Zinkenringen 14 vorgesehen.

In der Mitte der Trommel 11 befindet sich die Zinkengruppe Z5. Da neben der im Ausführungsbeispiel dargestellten Aufnahmevorrichtung 10 mit insgesamt neun Zinkengruppen Z1 bis Z9 auch Ausführungen mit einer anderen Anzahl von Zinkengruppen möglich sind, kann die mittlere Zinkengruppe Z5 in abstrakter Form auch als mittlere Zinkengruppe Zx bezeichnet werden. Analog dazu kann die von der ersten Zinkengruppe in Achsrichtung RA am weitersten beabstandete Gruppe, hier die Zinkengruppe Z9, auch als Zinkengruppe Zn bezeichnet werden. Die Trommel 11 weist einen zu einer Längsmittelebene 20 spiegelsymmetrischen Aufbau aus.

Die im mittleren Bereich 17 angeordnete Zinkengruppe Z5 = Zx weist jeweils nur zwei Zinkenringe 14 mit ohne Radialversatz benachbarten Förderzinken 13 auf. Die den Zinkengruppen Z5 benachbarten Zinkengruppen Z4 und Z6 sind in Bezug auf die Zinkengruppen Z5 in Rotationsrichtung RR nachlaufend versetzt angeordnet. Aus der Kombination von radialem Versatz und unterschiedlicher Zinkenanzahl der benachbarten Zinkengruppen Z4 und Z5 sowie Z5 und Z6 ergibt sich im mittleren Bereich der Trommel 11 ein besonders starker Breitzieheffekt.

Da im weiteren Verlauf der Trommel 11 die Zinkengruppen Z3 und Z2 bzw. Z7 und Z8 dieselbe Breite B und dieselbe Anzahl Zinkenringe 14 aufweisen wie die Zinkengruppen Z4 und Z6 und zudem der radiale Versatz der in Achsrichtung RA benachbarten Zinkengruppen jeweils gleich groß ist, ist der Breitzieheffekt in den Bereichen der Zinkengruppen Z2 bis Z4 bzw. Z6 bis Z8 konstant.

Die äußeren Zinkengruppen Z1 und Z9 werden dahingegen nicht aus vier, sondern aus sechs Zinkenringen 14 gebildet. Durch die somit größere Anzahl von Förderzinken 13 der Zinkengruppen Z1 und Z9 wird der Breitzieheffekt zu den Außenseiten der Trommel 11 hin reduziert oder sogar aufgehoben.

Im Ergebnis weist die dargestellte Aufnahmevorrichtung 10 im mittleren Bereich 17 einen relativ großen und in den Außenbereichen 18 und 19 einen relativ kleinen oder gar keinen Breitzieheffekt auf.

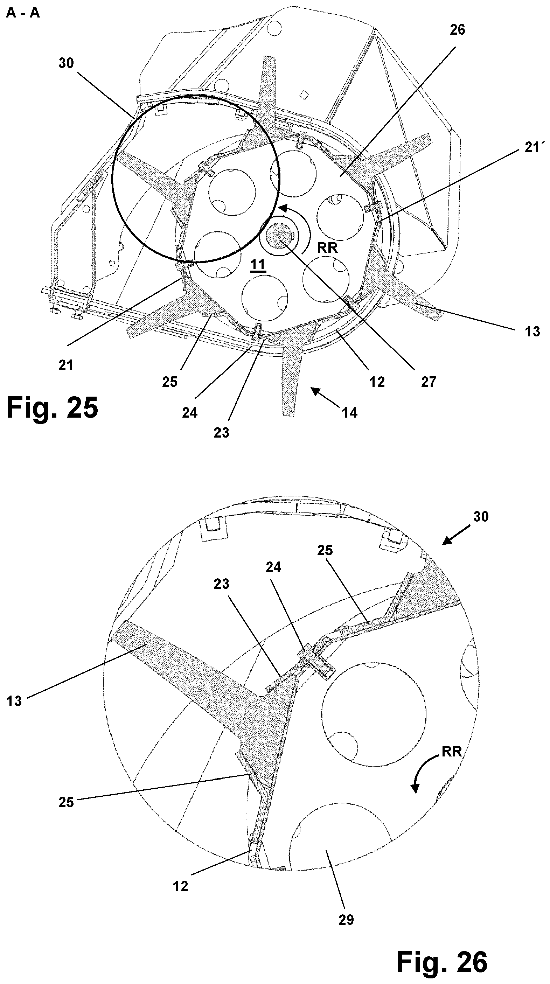

Nachfolgend werden die Figuren 25 bis 31 dargestellt. Die Figuren 25 bis 31 zeigen jedoch keine beanspruchten Ausführungsformen.

Fig. 25 zeigt die Aufnahmevorrichtung 10 in einer Schnittdarstellung gemäß einer in Fig. 24 enthaltenen Schnittlinie. Der Schnitt führt durch die sechs Förderzinken 13 eines Zinkenrings 14. Die Trommel 11 besteht im dargestellten Ausführungsbeispiel aus zwei gekanteten Teilschalen 21 und 21'. Die gekanteten Teilschalen 21 und 21' sind somit halbschalenförmig und bilden gemeinsam eine im vorliegenden Fall sechseckige Trommel 11. Aus der sechseckigen Form der Trommel 11 resultieren sechs ebene Bereiche auf der Mantelfläche 12 der Trommel 11. Auf diese ebenen Bereiche lassen sich die Förderzinken 13 besonders einfach mit hierfür vorgesehenen Befestigungselementen, wie Halteblechen 23 und 25 sowie Schrauben 24, befestigen. Im dargestellten Ausführungsbeispiel sind die Haltebleche 25 auf der Mantelfläche 12 der Trommel 11 fest verschweißt und bilden Aufnahmen, in die der vordere Bereich eines Zinkenfußes 47 formschlüssig einsteckbar ist. Die Haltebleche 23 werden mit Schrauben 24 auf den hinteren Bereich eines Zinkenfußes 47 montiert und fixieren die Förderzinken 13 somit (vgl. Ausschnitt 30, Fig. 26).

Die Figuren 27 und 28 zeigen eine in Segment-Bauweise hergestellte Trommel 11 im Zustand vor Montage der Förderzinken 13. Im dargestellten Beispiel umfasst die Trommel 11 insgesamt neun Segmente S1 bis S9. In verallgemeinerter Form kann das fünfte Segment S5 auch als mittleres Segment Sx bezeichnet werden. Analog dazu kann das Segment S9 auch als letztes auf der Trommel montiertes Segment Sn bezeichnet werden.

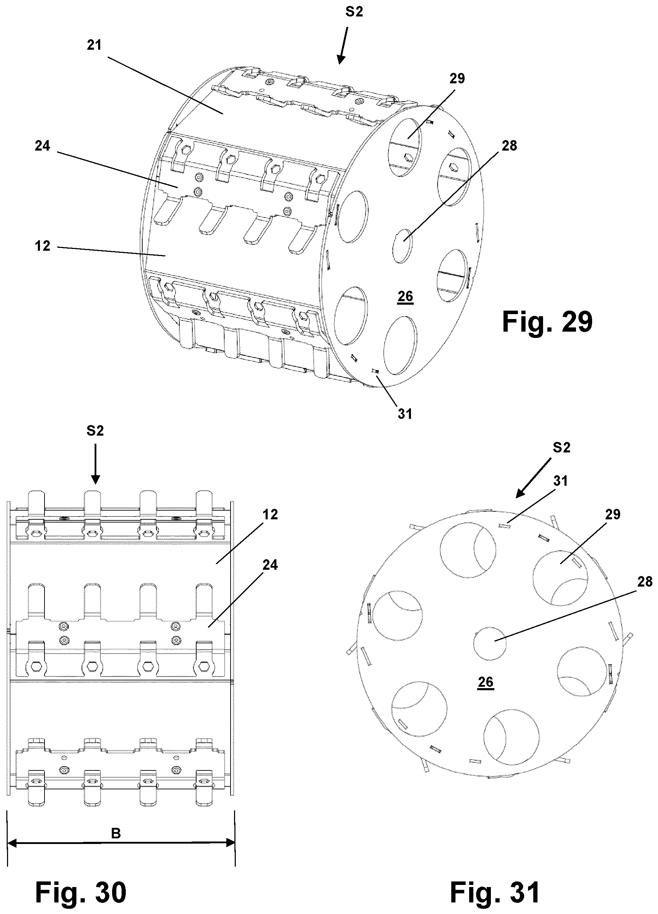

Als Beispiel für den grundsätzlichen Aufbau eines einzelnen Segmentes ist in Figur 29 das Segment S2 dargestellt. Ein Teil von Segment S2, nämlich eine Teilschale 21, ist auch in Fig. 28 zu sehen. Die einzelnen Segmente umfassen im dargestellten Ausführungsbeispiel jeweils zwei Teilschalen 21 und 21'. Anstelle zweier Teilschalen kann aber auch ein einstückiges Rohr oder eine größere Anzahl von Teilschalen vorgesehen sein. Auf der Mantelfläche 12 der Teilschalen 21, 21', die gleichzeitig Teil der Gesamt-Mantelfläche der Trommel 11 insgesamt ist, sind die angeschweißten Haltebleche 24 zu sehen. Die Förderzinken 13 und die zur Befestigung erforderlichen Haltebleche 23 sind in den Figuren 27 bis 31 insgesamt nicht enthalten.

Die Halbschalen 21 und 21' können an den Seiten von jeweils einer Ronde 26 begrenzt werden, so dass die Segment S1 bis Sn beidseitig geschlossen sind. Die Ronden 26 weisen Bohrungen 28 auf, deren Durchmesser an den Außendurchmesser der Antriebswelle 27 angepasst sind, so dass die einzelnen Segmente S1 bis Sn sich auf die Antriebswelle 27 aufstecken und dort, beispielsweise mit einer Schweißnaht, fixieren lassen. Um das Gewicht der Segmente zu reduzieren können die Ronden 26 weitere Bohrungen 29 aufweisen.

Die Segmente S1 bis S9 können bei der Fertigung der Trommel 11 auch so auf die Antriebswelle 27 aufgeschoben und verschweißt werden, dass zwischen den Halbschalen benachbarter Segmente jeweils nur eine Ronde 26 vorhanden ist. Beispielsweise können zwei Segmente S1 und S3 mit jeweils zwei Ronden 26 vorgefertigt und auf die Antriebswelle 27 aufgesteckt werden. Zwischen die Segmente S1 und S2 können im Anschluss daran Halbschalen 21, 21' eingesetzt und an die benachbarten Segmente S1 und S3 angeschweißt werden.

Im Ausführungsbeispiel gemäß der Figuren 27 und 28 sind an allen Segmenten S1 bis S9 die für die Förderzinken 13 vorgesehenen Halterungen so angebracht, dass in Achsrichtung AR der Trommel 11 gesehen benachbarte Förderzinken 13 keinen radialen Winkelversatz zueinander aufweisen. Dahingegen ist zwischen zwei Segmenten S1 und S2, S2 und S3, und so weiter, jeweils ein radialer Winkelversatz von 20° vorgesehen. Alternativ zu einem über die Trommel 11 gleichmäßigen Versatz der Segmente zueinander von 20° kann auch eine andere Versatz-Gradzahl vorhanden sein oder es können über die Gesamtbreite der Trommel 11 variierende Gradzahlen vorgesehen sein. Beispielsweise kann der Winkelversatz des mittleren Segments Sx zu den Nachbarsegmenten relativ groß und der Winkelversatz der äußeren Segmente S1 und Sn zu den jeweils benachbarten Segmenten relativ klein sein. Hierdurch wird der Breitzieheffekt in der Mitte der Trommel 11 verstärkt und an den Außenbereichen reduziert.

Um die Einstellung des radialen Versatzes der Segmente S1 bis Sn zueinander zu erleichtern, können auf den Segmenten S1 bis Sn Markierungen 31 vorgesehen sein.

### Bezugszeichenliste

- 10: Aufnahmevorrichtung
- 11: Trommel
- 12: äußere Mantelfläche (von 32)
- 13; 13': Förderzinken
- 14: Zinken-Ring
- 15: Zwischenraum
- 16: Abstreifer
- 17: mittlerer Bereich (von 11)
- 18: Außenbereich (von 11)
- 19: Außenbereich (von 11)
- 20: Längsmittelebene
- 21, 21': Teilschale
- 22: Drehachse
- 23: Halteblech
- 24: Schraube
- 25: Halteblech
- 26: Ronde
- 27: Antriebswelle
- 28: Bohrung
- 29: Bohrung
- 30: Ausschnitt
- 31: Markierung
- 32: Trommelmantel
- 33: Konturschnitt
- 34: Kontur (von 47)
- 35: Vieleck-Kontur (von 11)
- 36: Stützlager
- 37: Trägerkonstruktion
- 38: Zinkenhalter
- 39: Kantung
- 40: innere Mantelfläche (von 32)
- 41: Winkel (von 23)
- 42: Winkel (von 13)
- 43: -
- 44: -
- 45: -
- 46, 46': Aussparung
- 47: Zinkenfuß
- 48: Befestigungsvorsprung
- 49: Einsteckteil
- 50: Spalt
- 51: -
- 52: -
- 53: Gewindebohrung
- 54: Klemmteil
- 55: Kontur (von 54)
- 56: Kontur (von 47)
- 57: Einzelzinken
- 58: Steg
- 59: Schraube
- 60: Kante (von 46)
- 61: Spalt
- 62: -
- 63: Bohrung
- 64: -
- 65: -
- 66: -
- 67: -
- 68: -
- 69: -
- 70: Innenraum (von 11)

- A1: Ausschnitt
- A2: Ausschnitt
- A3: Ausschnitt
- A4: Ausschnitt
- AR: Achsrichtung
- A - A: Schnitt
- G -G: Schnitt
- H - H: Schnitt
- K - K: Schnitt
- L - L: Schnitt
- B: Breite (von S1, S2, ... , Sn)
- B1: Breite (von 38)
- B2: Breite (von 38)
- B3: Breite (von 46)
- FG: Kraft
- FK: Klemmkraft
- RA: Achsrichtung (von 11)
- RR: Drehrichtung (von 11)
- S1: Einzelsegment 1
- S2: Einzelsegment 2
- Sn: n-tes Einzelsegment
- Sx: mittleres Einzelsegment
- Z1: Zinkengruppe 1
- Z2: Zinkengruppe 2
- Z3: Zinkengruppe 3
- Zn: n-te Zinkengruppe
- Zx: mittlere Zinkengruppe

## Patentansprüche

1. Aufnahmevorrichtung (10)
- für eine Erntemaschine, wie einen Ladewagen, eine Ballenpresse, eine Heuwerbemaschine oder einen Feldhäcksler zur Aufnahme von auf einer Feld- oder Wiesenfläche liegendem Erntegut und zur Weiterförderung des Ernteguts an eine nachfolgende Erntegut-Bearbeitungseinrichtung oder
- für eine Maschine zum Aufsammeln von Abfällen und/oder Stückgut vom Boden, wie eine Strandreinigungsmaschine
umfassend:
- eine Trägerkonstruktion (37) mit einer daran gehaltenen drehantreibbaren Trommel (11), wobei die Trommel (11) einen Trommelmantel (32) mit einer äußeren Mantelfläche (12) und einer inneren Mantelfläche (40) aufweist,
- eine Vielzahl von an der Trommel (11) angeordneten, über die äußere Mantelfläche (12) der Trommel (11) abstehenden Förderzinken (13; 13') mit einem Zinkenfuß (47) und einem oder mehreren Einzelzinken (57), wobei der Förderzinken (13, 13') aus einem elastischen Kunststoff gefertigt ist, der unter Lasteinwirkung verformbar ist und nach Beendigung der Lasteinwirkung wieder eine ursprüngliche Form annimmt,
wobei die Aufnahmevorrichtung (10) weiterhin aus einem Blechzuschnitt hergestellte Zinkenhalter (38) zur Fixierung der Förderzinken (13; 13') an der Trommel (11) umfasst,
**dadurch gekennzeichnet, dass** der Trommelmantel (32),
- Aussparungen (46) zur Aufnahme eines an einem Zinkenhalter (38) vorgesehenen Einsteckteils (49) und/oder
- Aussparungen (46') zur Aufnahme eines am Förderzinken (13') vorgesehenen Befestigungsvorsprungs (48) aufweist, so dass wenigstens ein Teil einer im Arbeitseinsatz auf die Förderzinken (13; 13') einwirkenden Kraft (FG) auf den innerhalb der Trommel (11) befindlichen Befestigungsvorsprung (48) und/oder das innerhalb der Trommel befindlichen Einsteckteils (49) übertragbar ist.

2. Aufnahmevorrichtung nach Anspruch 1, **dadurch gekennzeichnet, dass** die Trommel (11) eine runde Kontur oder eine Vieleck-Kontur (35) aufweist.

3. Aufnahmevorrichtung nach Anspruch 1 oder 2, **dadurch gekennzeichnet, dass** der Zinkenhalter (38) ein Klemmteil (54) mit einer Kontur (55) umfasst, welche an eine am Zinkenfuß (47) vorgesehene U-förmige Kontur (56) angepasst ist, so dass das Klemmteil (54) und der Zinkenfuß (47) einander im montierten Zustand formschlüssig kontaktieren.

4. Aufnahmevorrichtung nach Anspruch 3, **dadurch gekennzeichnet, dass** die formschlüssige Kontaktierung von Klemmteil (54) und Zinkenfuß (47) durch zwei am Zinkenfuß (47) vorgesehene Stege (58) ausgebildet ist, welche das Klemmteil (54) im montierten Zustand umgreifen.

5. Aufnahmevorrichtung nach einem der Ansprüche 3 oder 4, **dadurch gekennzeichnet, dass** eine am Klemmteil (54) des Zinkenhalters (38) vorgesehene Breite (B1) größer ist als einen an eine an der Aussparung (46) vorgesehene Breite (B3).

6. Aufnahmevorrichtung nach einem der Ansprüche 1 bis 5, **dadurch gekennzeichnet, dass** das Einsteckteil (49) des Zinkenhalters (38) eine Gewindebohrung (53) aufweist und im Trommelmantel (32) eine mit der Gewindebohrung (53) koinzidierende Bohrung (63) zur Aufnahme einer Schraube (59) vorgesehen ist, so dass mittels der Schraube (59) der Zinkenhalter (38) und damit der Förderzinken (13; 13') auf der Trommel (11) fixierbar ist.

7. Aufnahmevorrichtung nach Anspruch 6, **dadurch gekennzeichnet, dass** im montierten Zustand
- das Klemmteil (54) des Zinkenhalters (38) am Zinkenfuß (47) anliegt,
- der Zinkenhalter (38) am Übergang von Klemmteil (54) zu Einsteckteil (49) eine Kante (60) der im Trommelmantel (32) befindlichen Aussparung (46) kontaktiert,
- zwischen der Innenfläche des Trommelmantels (32) und dem Einsteckteil (49) ein Spalt (61) vorgesehen ist
so dass sich bei Eindrehen der Schraube (59) in die Gewindebohrung (53) der Zinkenhalter (38) an der Kante (60) gegenüber dem Trommelmantel (32) abstützt und mit seinem Klemmteil (54) eine Klemmkraft (FK) auf den Zinkenfuß (47) ausübt.

8. Aufnahmevorrichtung nach einem der Ansprüche 1 bis 7, **dadurch gekennzeichnet, dass**
- in den Trommelmantel (32) Konturschnitte (33) eingebracht sind und ein von einem Konturschnitt (33) umgebender Bereich jeweils ein Stützlager (36) ausbildet,
- die Stützlager (36) den Trommelmantel (32) nach innen oder außen überragen und im montierten Zustand die Förderzinken (13; 13') fixieren.

9. Aufnahmevorrichtung (10) nach einem der Ansprüche 1 bis 8, **dadurch gekennzeichnet, dass**
- die Förderzinken (13; 13') an der Trommel (11) derart verteilt sind, dass sie nebeneinanderliegende, voneinander beabstandete, Zinken-Ringe (14) bilden,
- wobei zwischen benachbarten Zinken-Ringen (14) Zwischenräume (15) zur Aufnahme von Abstreifern (16), vorgesehen sind,
- in Achsrichtung (AR) der Trommel (11) benachbart angeordneten Förderzinken (13; 13') Zinkengruppen (Z1, Z2, Z3, ... ,Zn) bilden, bei welchen die Förderzinken (13; 13') einen radialen Versatz zueinander von 0° aufweisen,
- benachbarte Zinkengruppen (Z1, Z2, Z3, ..., Zn) ausgehend von der im mittleren Bereich (17) der Trommel (11) angeordneten mittleren Zinkengruppe (ZX) nachlaufend versetzt angeordnet sind,
- wenigstens zwei Zinkengruppen (Z1, Z2, Z3, ..., Zn) eine unterschiedliche Anzahl von Förderzinken (13; 13') aufweisen.

10. Aufnahmevorrichtung (10) nach Anspruch 9, **dadurch gekennzeichnet, dass** der radiale Versatz benachbarter Zinkengruppen (Z1, Z2); (Z2, Z3); ...; (Z₍ₙ₋₁₎, Zn) variiert, insbesondere im mittleren Bereich (17) der Trommel (11) größer ist als zu den Außenbereichen (18, 19) hin, so dass sich im mittleren Bereich (17) ein verstärkter und zu den Außenbereichen (18, 19) hin ein reduzierter Breitzieheffekt auf das Erntegut ergibt.

11. Aufnahmevorrichtung (10) nach einem der Ansprüche 1 bis 10, **dadurch gekennzeichnet, dass** die Trommel (11) wenigstens drei Einzelsegmenten (S1, S2, ..., Sn) umfasst.

12. Aufnahmevorrichtung (10) nach Anspruch 11, **dadurch gekennzeichnet, dass** die Breite (B) der Segmente (S1, S2, ..., Sn) an die Anzahl der Förderzinken (13; 13') der jeweiligen Zinkengruppe (Z1, Z2, ..., Zn) angepasst ist, so dass die auf einem Segment (S1, S2, ... Sn) angeordneten und in Achsrichtung (RA) der Trommel (11) nebeneinander benachbarten Förderzinken (13; 13') einen radialen Versatz zueinander von 0° aufweisen.

13. Aufnahmevorrichtung (10) nach einem der Ansprüche 1 bis 12, **dadurch gekennzeichnet, dass** der Trommelmantel (32) der Trommel (11) aus wenigstens zwei gekanteten Teilschalen (21, 21') gebildet wird.

14. Aufnahmevorrichtung (10) nach einem der Ansprüche 11 bis 13, **dadurch gekennzeichnet, dass** der Trommelmantel (32) der Segmente (S1, S2, ... Sn) aus wenigstens zwei gekanteten Teilschalen (21, 21') gebildet wird.

## Claims

1. Pick-up device (10)
- for a harvesting machine, such as a loader wagon, a baler, a haymaking machine or a forage harvester, for picking up crop material lying on a field or meadow and for conveying the crop material to a subsequent crop processing device, or
- for a machine for collecting waste and/or piece goods from the floor, such as a beach cleaning machine
comprising:
- a support structure (37) with a rotatable drum (11) held thereon, wherein the drum (11) has a drum shell (32) with an outer shell surface (12) and an inner shell surface (40),
- a plurality of conveyor tines (13; 13') arranged on the drum (11) and projecting beyond the outer shell surface (12) of the drum (11), with a tine foot (47) and one or more single tines (57), wherein the conveyor tine (13, 13') is made of an elastic plastic material which is deformable under load and returns to its original shape after removal of the load,
wherein the pick-up device (10) further comprises tine holders (38) made from a sheet metal blank for fixing the conveyor tines (13; 13') to the drum (11),
**characterised in that** the drum shell (32)
- has recesses (46) for receiving an insertion part (49) provided on a tine holder (38) and/or
- recesses (46') for receiving a fastening projection (48) provided on the conveyor tine (13'),
so that at least part of a force (FG) acting on the conveyor tines (13; 13') during operation can be transmitted to the fastening projection (48) located inside the drum (11) and/or to the insertion part (49) located inside the drum.

2. Pick-up device according to claim 1, **characterised in that** the drum (11) has a round contour or a polygonal contour (35).

3. Pick-up device according to claim 1 or 2, **characterised in that** the tine holder (38) comprises a clamping part (54) with a contour (55), which is adapted to a U-shaped contour (56) provided on the tine foot (47), so that the clamping part (54) and the tine foot (47) are in positive contact with each other when assembled.

4. Pick-up device according to claim 3, **characterised in that** the form-fit contact between the clamping part (54) and the tine foot (47) is formed by two webs (58) provided on the tine foot (47), which surround the clamping part (54) in the assembled state.

5. Pick-up device according to one of claims 3 or 4, **characterised in that** a width (B1) provided on the clamping part (54) of the tine holder (38) is greater than a width (B3) provided on the recess (46).

6. Pick-up device according to one of claims 1 to 5, **characterised in that** the insertion part (49) of the tine holder (38) has a threaded hole (53) and the drum shell (32) is provided with a bore (63) coinciding with the threaded hole (53) for receiving a screw (59), so that the tine holder (38) and thus the conveyor tine (13; 13') can be fixed to the drum (11) by means of the screw (59).

7. Pick-up device according to claim 6, **characterised in that**, in the assembled state
- the clamping part (54) of the tine holder (38) rests against the tine foot (47),
- the tine holder (38) contacts an edge (60) of the recess (46) located in the drum shell (32) at the transition from the clamping part (54) to the insertion part (49),
- a gap (61) is provided between the inner surface of the drum shell (32) and the insertion part (49),
such that when the screw (59) is screwed into the threaded hole (53), the tine holder (38) is supported on the edge (60) opposite the drum shell (32) and exerts a clamping force (FK) on the tine foot (47) with its clamping part (54).

8. Pick-up device according to one of claims 1 to 7, **characterised in that**
- contour cuts (33) are made in the drum shell (32) and an area surrounded by a contour cut (33) forms a support bearing (36),
- the support bearings (36) protrude inwards or outwards from the drum shell (32) and fix the conveyor tines (13; 13') in the assembled state.

9. Pick-up device (10) according to one of claims 1 to 8, **characterised in that**
- the conveyor tines (13; 13') are distributed on the drum (11) in such a way that they form adjacent, spaced-apart tine rings (14),
- wherein spaces (15) are provided between adjacent tine rings (14) for receiving scrapers (16),
- conveyor tines (13; 13') arranged adjacent to one another in the axial direction (AR) of the drum (11) form tine groups (Z1, Z2, Z3, ..., Zn), in which the conveyor tines (13; 13') have a radial offset of 0° relative to one another,
- adjacent tine groups (Z1, Z2, Z3, ..., Zn) are arranged in a staggered manner starting from the central tine group (ZX) arranged in the central region (17) of the drum (11),
- at least two tine groups (Z1, Z2, Z3, ..., Zn) have a different number of conveyor tines (13; 13').

10. Pick-up device (10) according to claim 9, **characterised in that** the radial offset of adjacent tine groups (Z1, Z2); (Z2, Z3); ...; (Z(n-1), Zn) varies, in particular is greater in the central region (17) of the drum (11) than towards the outer regions (18, 19), so that in the central region (17) there is an increased and, towards the outer regions (18, 19), a reduced shearing effect on the crop.

11. Pick-up device (10) according to one of claims 1 to 10, **characterised in that** the drum (11) comprises at least three individual segments (S1, S2, ..., Sn).

12. Pick-up device (10) according to claim 11, **characterised in that** the width (B) of the segments (S1, S2, ..., Sn) is adapted to the number of conveyor tines (13; 13') of the respective tine group (Z1, Z2, ..., Zn), so that the conveyor tines (13; 13') arranged on a segment (S1, S2, ..., Sn) and adjacent to each other in the axial direction (RA) of the drum (11) have a radial offset of 0° from each other.

13. Pick-up device (10) according to one of claims 1 to 12, **characterised in that** the drum shell (32) of the drum (11) is formed from at least two folded partial shells (21, 21').

14. Pick-up device (10) according to one of claims 11 to 13, **characterised in that** the drum shell (32) of the segments (S1, S2, ..., Sn) is formed from at least two folded partial shells (21, 21').

## Revendications

1. Dispositif de réception (10)
- pour une machine de récolte, telle qu'une remorque autochargeuse, une presse à balles, une machine de fenaison ou une ensileuse, destiné à ramasser les produits récoltés se trouvant sur une surface de champ ou de prairie et à les acheminer vers un dispositif de traitement des produits récoltés situé en aval, ou
- pour une machine destinée à ramasser des déchets et/ou des marchandises en vrac sur le sol, telle qu'une machine de nettoyage de plage
comprenant :
- une structure de support (37) sur laquelle est maintenu un tambour (11) pouvant être entraîné en rotation, le tambour (11) présentant une enveloppe du tambour (32) avec une surface de l'enveloppe extérieure (12) et une surface de l'enveloppe intérieure (40),
- une pluralité de dents de transport (13 ; 13') disposées sur le tambour (11) et faisant saillie au-delà de la surface de l'enveloppe extérieure (12) du tambour (11), avec un pied de dent (47) et une ou plusieurs dents individuelles (57), les dents de transport (13, 13') étant fabriquées dans une matière plastique élastique qui est déformable sous l'effet d'une charge et reprend sa forme initiale lorsque la charge cesse,
le dispositif de réception (10) comprenant en outre des supports de dents (38) fabriqués à partir d'une découpe de tôle pour la fixation des dents de transport (13 ; 13') sur le tambour (11),
**caractérisé en ce que** l'enveloppe du tambour (32) comporte
- des évidements (46) destinés à recevoir une pièce d'insertion (49) prévue sur un support de dents (38) et/ou
- des évidements (46') destinés à recevoir une saillie de fixation (48) prévue sur la dent de transport (13'),
de sorte qu'au moins une partie d'une force (FG) agissant sur les dents de transport (13 ; 13') lors du fonctionnement peut être transmise à la saillie de fixation (48) située à l'intérieur du tambour (11) et/ou à la pièce d'insertion (49) située à l'intérieur du tambour.

2. Dispositif de réception selon la revendication 1, **caractérisé en ce que** le tambour (11) présente un contour rond ou un contour polygonal (35).

3. Dispositif de réception selon la revendication 1 ou 2, **caractérisé en ce que** le support de dents (38) comprend une pièce de serrage (54) avec un contour (55) qui est adapté à un contour en forme de U (56) prévu sur le pied de dent (47), de sorte que la pièce de serrage (54) et le pied de dent (47) soient en contact par complémentarité de forme à l'état monté.

4. Dispositif de réception selon la revendication 3, **caractérisé en ce que** le contact par complémentarité de forme entre la pièce de serrage (54) et le pied de dent (47) est assuré par deux nervures (58) prévues sur le pied de dent (47), qui entourent la pièce de serrage (54) à l'état monté.

5. Dispositif de réception selon l'une des revendications 3 ou 4, **caractérisé en ce qu'**une largeur (B1) prévue sur la pièce de serrage (54) du support à dents (38) est supérieure à une largeur (B3) prévue sur l'évidement (46).

6. Dispositif de réception selon l'une des revendications 1 à 5, **caractérisé en ce que** la pièce d'insertion (49) du support de dents (38) présente un trou fileté (53) et que dans l'enveloppe du tambour (32) un alésage (63) est prévu coïncidant avec le trou fileté (53) pour recevoir une vis (59), de sorte que le support de dents (38) et donc les dents de transport (13 ; 13') peuvent être fixés sur le tambour (11) à l'aide de la vis (59).

7. Dispositif de réception selon la revendication 6, **caractérisé en ce que**, à l'état monté
- la pièce de serrage (54) du support de dents (38) repose contre le pied de dent (47),
- le support de dents (38) est en contact, à la transition entre la pièce de serrage (54) et la pièce d'insertion (49), avec un bord (60) de l'évidement (46) situé dans l'enveloppe du tambour (32),
- entre la surface intérieure de l'enveloppe du tambour (32) et la pièce enfichable (49) est prévu un interstice (61),
de telle sorte que, lors du vissage de la vis (59) dans le trou fileté (53), le support de dents (38) s'appuie sur l'arête (60) en face de l'enveloppe du tambour (32) et exerce avec sa pièce de serrage (54) une force de serrage (FK) sur le pied de dent (47).

8. Dispositif de réception selon l'une des revendications 1 à 7, **caractérisé en ce que**
- des découpes des contours (33) sont pratiquées dans l'enveloppe du tambour (32) et une zone entourée par une découpe des contours (33) forme respectivement un palier de support (36),
- les paliers de support (36) dépassent vers l'intérieur ou vers l'extérieur de l'enveloppe du tambour (32) et fixent les dents de transport (13 ; 13') à l'état monté.

9. Dispositif de réception (10) selon l'une des revendications 1 à 8, **caractérisé en ce que**
- les dents de transport (13 ; 13') sont réparties sur le tambour (11) de telle sorte qu'elles forment des anneaux à dents (14) juxtaposés et espacés les uns des autres,
- des espaces intermédiaires (15) étant prévus entre les anneaux à dents (14) adjacents pour recevoir des racloirs (16),
- les dents de transport (13 ; 13') disposées de manière adjacente dans la direction axiale (AR) du tambour (11) forment des groupes de dents (Z1, Z2, Z3, ..., Zn) dans lesquels les dents de transport (13 ; 13') présentent un décalage radial de 0° les unes par rapport aux autres,
- les groupes de dents adjacents (Z1, Z2, Z3, ..., Zn) sont disposés de manière décalée vers l'arrière à partir du groupe de dents central (ZX) situé dans la zone centrale (17) du tambour (11),
- au moins deux groupes de dents (Z1, Z2, Z3, ..., Zn) comportent un nombre différent de dents de transport (13 ; 13').

10. Dispositif de réception (10) selon la revendication 9, **caractérisé en ce que** le décalage radial des groupes de dents adjacents (Z1, Z2) ; (Z2, Z3) ; ... ; (Z(n-1), Zn) est variable, en particulier dans la zone centrale (17) du tambour (11), où il est plus important que vers les zones extérieures (18, 19), de sorte qu'il en résulte un effet d'élargissement accru dans la zone centrale (17) et réduit vers les zones extérieures (18, 19) sur la récolte.

11. Dispositif de réception (10) selon l'une des revendications 1 à 10, **caractérisé en ce que** le tambour (11) comprend au moins trois segments individuels (S1, S2, ..., Sn).

12. Dispositif de réception (10) selon la revendication 11, **caractérisé en ce que** la largeur (B) des segments (S1, S2, ..., Sn) est adaptée au nombre de dents de transport (13 ; 13') du groupe de dents (Z1, Z2, ..., Zn) correspondant, de sorte que les dents de transport (13 ; 13') disposées sur un segment (S1, S2, ..., Sn) et adjacentes les unes aux autres dans la direction axiale (RA) du tambour (11) présentent un décalage radial de 0° par rapport aux dents de transport (13 ; 13') disposées sur le segment (S1, S2, ..., Sn) suivant.

13. Dispositif de réception (10) selon l'une des revendications 1 à 12, **caractérisé en ce que** l'enveloppe (32) du tambour (11) est formée d'au moins deux coques partielles pliées (21, 21').

14. Dispositif de réception (10) selon l'une des revendications 11 à 13, **caractérisé en ce que** l'enveloppe (32) du tambour des segments (S1, S2, ..., Sn) est formée d'au moins deux coques partielles (21, 21') pliées.
